# EUROPEAN PATENT APPLICATION

(11) **EP 4 270 531 A1**
(43) Date of publication of application: **01.11.2023**
(21) Application number: 20967318.5
(22) Date of filing: 28.12.2020
(51) Int. Cl.: H01M 4/134

(54) **NEGATIVE ELECTRODE SHEET, ELECTROCHEMICAL DEVICE, AND ELECTRONIC DEVICE**

(71) Applicant: Ningde Amperex Technology Limited, Ningde, Fujian 352100 (CN)
(72) Inventor: JIANG, Daoyi, Ningde, Fujian 352100 (CN); CHEN, Zhihuan, Ningde, Fujian 352100 (CN)
(74) Representative: Icosa
(86) International application number: PCT/CN2020/140346
(87) International publication number: WO 2022/140967

(57) **Abstract**

This application provides a negative electrode plate, an electrochemical device, and an electronic device. The negative electrode plate includes: a current collector; an active material layer, located on the current collector, where the active material layer includes a silicon-based material and a carbon material; and a protection layer, where the protection layer includes an element M, the active material layer is disposed between the current collector and the protection layer, and, when the protection layer is divided into two or more layers at one or more arbitrary positions, a mass percent of the element M in a layer away from the current collector is greater than a mass percent of the element M in a layer close to the current collector, and the element M includes at least one of Al, Ti, Mg, Ru, Zr, Hf, Nb, Ca, Zn, or Ce. The electrochemical device according to this application enhances safety performance of the electrochemical device with little impact on a volumetric energy density. The disposed protection layer reduces or avoids side reactions of an active material in the active material layer.

## Description

### TECHNICAL FIELD

This application relates to the field of electrochemical energy storage, and in particular, to a negative electrode plate, an electrochemical device, and an electronic device.

### BACKGROUND

With the development and progress of electrochemical devices (such as a lithium-ion battery), higher requirements have been posed on the safety performance of the electrochemical devices. Although the current technology for improving the electrochemical devices can improve the safety performance of the electrochemical devices to some extent, the improvement is still unsatisfactory and more improvements are expected.

### SUMMARY

Some embodiments of this application provi#e a negative electrode plate. The negative electrode plate includes a current collector, an active material layer, and a protection layer. The active material layer is located on the current collector. The active material layer includes a silicon-based material and a carbon material. The protection layer includes an element M. The active material layer is disposed between the current collector and the protection layer. When the protection layer is divided into two or more layers at one or more arbitrary positions, a mass percent of the element M in a layer away from the current collector is greater than a mass percent of the element M in a layer close to the current collector. The element M includes at least one of Al, Ti, Mg, Ru, Zr, Hf, Nb, Ca, Zn, or Ce.

In some embodiments, the mass percent of the element M in the protection layer increases gradually with increase of remoteness from the current collector. In some embodiments, the protection layer includes a first material. The first material includes at least one of Al₂O₃, TiO₂, MgO, RuO₂, AlF₃, CaF₂, MgF₂, ZnF₂, or CeO₂. In some embodiments, a thickness of atoms of the element M on the surface of the active material particles is 0.1 nm to 10 nm. In some embodiments, a mass ratio between the first material and the active material layer per unit area is less than 5%. In some embodiments, a mass ratio between the first material and the active material layer per unit area is less than 2%. In some embodiments, a porosity of the negative electrode plate is 15% to 25%. In some embodiments, a mass percent of the silicon-based material in the active material layer is 5% to 60%. In some embodiments, the silicon-based material includes at least one of a silicon-oxygen material, a silicon-carbon material, or a silicon alloy. In some embodiments, the carbon material includes graphite. In some embodiments, the negative electrode plate further includes a lithium metal layer. The lithium metal layer is disposed on the protection layer on a side away from the active material layer.

Another embodiment of this application provides an electrochemical device, including: a positive electrode plate; a negative electrode plate; and a separator. The separator is disposed between the positive electrode plate and the negative electrode plate. The negative electrode plate is any one of the negative electrode plates described above. An embodiment of this application further provides an electronic device, including the electrochemical device.

In this embodiment of this application, a protection layer is disposed between the current collector and the active material layer, and the element M includes at least one of Al, Ti, Mg, Ru, Zr, Hf, Nb, Ca, Zn, or Ce, thereby reducing or avoiding side reactions between an active material (such as a silicon-based material) in the active material layer and another material such as an electrolytic solution. In addition, due to existence of the protection layer, the coating thickness of the separator of the electrochemical device can be reduced, thereby increasing the energy density of the electrochemical device.

### BRIEF DESCRIPTION OF DRAWINGS

FIG. 1 is a schematic diagram of an electrode assembly of a conventional electrochemical device;
FIG. 2 is a cross-sectional view of a negative electrode plate according to some embodiments of this application; and
FIG. 3 is a cross-sectional view of a negative electrode plate according to some other embodiments of this application.

### DETAILED DESCRIPTION OF EMBODIMENTS

The following embodiments enable a person skilled in the art to understand this application more comprehensively, but without limiting this application in any way.

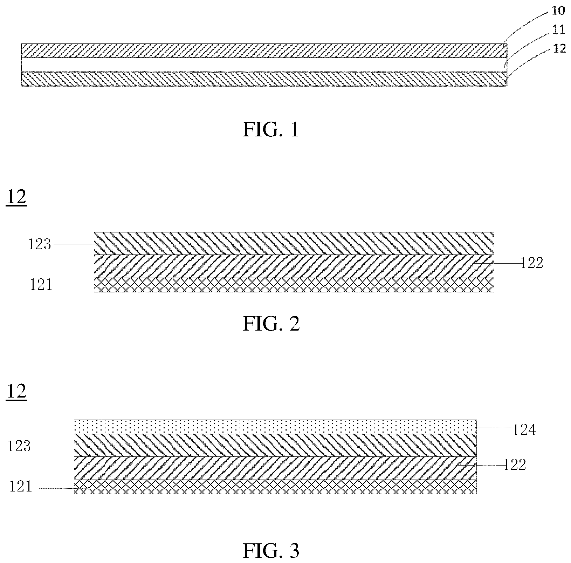

As shown in FIG. 1, an expanded cross-sectional view of a conventional electrochemical device is provided. The electrochemical device may include an electrode assembly. The electrode assembly includes a positive electrode plate 10, a negative electrode plate 12, and a separator 11 disposed between the positive electrode plate 10 and the negative electrode plate 12.

In some embodiments, as shown in FIG. 2, the negative electrode plate 12 may include a current collector 121, an active material layer 122, and a protection layer 123. In some embodiments, the active material layer 122 is located on the current collector 121. Understandably, although the active material layer 122 shown in FIG. 2 is disposed on just one side of the current collector 121, the arrangement in the drawing is merely exemplary, and the active material layer 122 may be disposed on both sides of the current collector 121 instead. In some embodiments, the active material layer 122 includes a silicon-based material and a carbon material. In some embodiments, the active material layer 122 is disposed between the current collector 121 and the protection layer 123. When both sides of the current collector 121 are coated with the active material layer 122, the protection layer 123 may be disposed on just one of the active material layers 122. Specifically, after the negative electrode plate 12 and the separator 11 are assembled together, the protection layer 123 may be disposed on the active material layer 122 that is away from the separator 11.

In some embodiments, the protection layer 123 includes an element M. In some embodiments, when the protection layer 123 is divided into two or more layers at one or more arbitrary positions, the mass percent of the element M in a layer away from the current collector 121 is greater than the mass percent of the element M in a layer close to the current collector 121. Because the active material layer 122 generally assumes a porous structure, some M ions may permeate into the active material layer 122 during formation of the protection layer 123. By causing the mass percent of the element M in a layer away from the current collector 121 to be greater than the mass percent of the element M in a layer close to the current collector 121, because the mass percent of the element M in the layer away from the current collector 121 is greater, this application more effectively prevents side reactions between an active material (such as a silicon-based material) in the active material layer 122 and another substance (such as some substances in a subsequently formed lithium metal layer or in the electrolytic solution). In some embodiments, the element M includes at least one of Al, Ti, Mg, Ru, Zr, Hf, Nb, Ca, Zn, or Ce.

Especially, with the continuous cycling of the electrochemical device, lithium in the electrolytic solution is lost to some extent. Therefore, in some embodiments, a layer of metal lithium is formed on the active material layer 122 to perform pre-lithiation and facilitate subsequent lithium supplementing. However, in the absence of the protection layer 123, the silicon-based material in the active material layer 122 is in vast contact with lithium metal and actuates chemical reactions to generate lithium silicate and emit a large amount of heat, thereby not only reducing the efficiency of the lithium metal in supplementing lithium, but also being detrimental to the safety performance of electrochemical device. By disposing the protection layer 123 on the active material layer 122, this application reduces or avoids the direct contact between the silicon-based material in the active material layer 122 and the subsequently formed lithium metal, that is, reduces the side reactions such as generating lithium silicate, and avoids a large amount of heat generated by the side reactions, thereby improving the safety performance of the electrochemical device. In addition, the disposed protection layer 123 reduces the possibility that the subsequently formed lithium metal penetrates the separator, thereby further improving the safety performance of the electrochemical device. In addition, the protection layer 123 is formed on the active material layer 122, and some M ions may permeate into the active material layer 122. In this way, the protection layer 123 can act in place of some functions of the oxide coating on the separator, thereby reducing the thickness of the oxide coating on the separator and increasing the energy density of the electrochemical device.

In some embodiments, the protection layer 123 may be formed by at least one of atomic layer deposition, chemical vapor deposition, physical vapor deposition, or thermal evaporation.

In some embodiments, the mass percent of the element M in the protection layer 123 increases gradually with increase of remoteness from the current collector 121. By causing the mass percent of the element M in the layer away from the current collector 121 to increase gradually with the increase of remoteness from the current collector 121, this application more effectively prevents side reactions between an active material (such as a silicon-based material) in the active material layer 122 and another substance (such as some substances in a subsequently formed lithium metal layer or in the electrolytic solution), reduces the heat generated by the side reactions, and improves the safety performance of the electrochemical device.

In some embodiments, the protection layer 123 includes a first material. The first material includes at least one of Al₂O₃, TiO₂, MgO, RuO₂, AlF₃, CaF₂, MgF₂, ZnF₂, or CeO₂. Such first materials are relatively inert in contrast to the metal lithium or the electrolytic solution, and therefore, can passivate and protect the active material layer 122.

In some embodiments, a thickness of atoms of the element M on the surface of the active material particles is 0.1 nm to 10 nm. If the thickness of atoms of the element M on the surface of the active material particles is deficient, for example, less than 0.1 nm, the protective effect exerted by the element M is relatively limited. On the other hand, if the thickness of atoms of the element M on the surface of the active material particles is excessive, for example, greater than 10 nm, the element M may be detrimental to the increase of the energy density of the electrochemical device. In some embodiments, the thickness of atoms of the element M on the surface of the active material particles may be determined through a scanning electron microscopy image of a cross-section of the negative electrode plate. However, the determining method is merely exemplary but not intended to limit this application. Other appropriate determining methods may apply instead.

In some embodiments, a mass ratio between the first material and the active material layer 122 per unit area is less than 5%, or is greater than 0 and less than 5%. If the mass ratio between the first material and the active material layer 122 is excessive, for example, greater than 5%, the first material is detrimental to improvement of the direct-current resistance and the energy density of the electrochemical device. In some embodiments, the mass ratio between the first material and the active material layer 122 per unit area is less than 2%. In this way, the protection layer plays a protection role while minimizing the adverse effects brought by the low-conductivity first materials onto the direct-current resistance and energy density of the electrochemical device.

In some embodiments, a porosity of the negative electrode plate 12 is 15% to 25%. If the porosity of the negative electrode plate 12 is excessive, for example, greater than 25%, the pores are detrimental to the increase of the energy density of the electrochemical device, and may consume the electrolytic solution excessively. If the porosity of the negative electrode plate 12 is deficient, for example, less than 15%, the pores are detrimental to improvement of the overall electrical conductivity of the negative electrode plate 12.

In some embodiments, a mass percent of the silicon-based material in the active material layer 122 is 5% to 60%. In some embodiments, if the mass percent of the silicon-based material in the active material layer 122 is deficient, the effect of increasing the energy density by using the silicon-based material is limited. If the mass percent of the silicon-based material in the active material layer 122 is excessive, the silicon-based material may cause large volume expansion during cycling, thereby being detrimental to stability of a solid electrolyte interface (SEI) film of the negative electrode, and being prone to consume the electrolytic solution excessively. In addition, an excessive mass percent of the silicon-based material in the active material layer 122 leads to an increase of the side reactions of the silicon-based material.

In some embodiments, the silicon-based material in the active material layer 122 includes at least one of a silicon-oxygen material, a silicon-carbon material, or a silicon alloy. In some embodiments, the carbon material in the active material layer 122 includes graphite.

In some embodiments, as shown in FIG. 3, the negative electrode plate 12 further includes a lithium metal layer 124. The lithium metal layer 124 is disposed on the protection layer 123 on a side away from the active material layer 122. The disposed lithium metal layer 124 improves the first-cycle Coulombic efficiency of the electrochemical device, and in turn, increases the energy density of the electrochemical device. In addition, lithium can be supplemented continuously with the cycling of the electrochemical device, thereby slowing down the loss of lithium ions.

As mentioned above, an electrochemical device is provided. The electrochemical device includes an electrode assembly. The electrode assembly includes a positive electrode plate 10, a negative electrode plate 12, and a separator 11 disposed between the positive electrode plate 10 and the negative electrode plate 12. The negative electrode plate 12 is any one of the negative electrode plates described above.

In some embodiments, the current collector 121 of the negative electrode plate 12 may be at least one of a copper foil, a nickel foil, or a carbon-based current collector. In some embodiments, a compacted density of an active material layer 122 of the negative electrode plate 12 may be 1.0 g/cm³ to 1.9 g/cm³. If the compacted density of the negative active material layer is deficient, the compacted density may impair the volumetric energy density of the electrochemical device. If the compacted density of the active material layer 122 is excessive, the compacted density is detrimental to conducting lithium ions, and is prone to intensify polarization, impair the electrochemical performance, and incur lithium plating during charging of the electrochemical device. In some embodiments, the active material layer 122 may further include a conductive agent and a binder. The conductive agent in the active material layer 122 may include at least one of conductive carbon black, Ketjen black, graphite flakes, graphene, carbon nanotubes, or carbon fiber. In some embodiments, the binder in the active material layer 122 may include at least one of carboxymethyl cellulose (CMC), polyacrylic acid, polyvinylpyrrolidone, polyaniline, polyimide, polyamideimide, polysiloxane, styrene butadiene rubber, epoxy resin, polyester resin, polyurethane resin, or polyfluorene. Understandably, the materials disclosed above are merely examples, and the active material layer 122 may be made of any other appropriate materials. In some embodiments, a mass ratio between the negative active material (such as the silicon-based material and the carbon material), the conductive agent, and the binder in the active material layer 122 may be (70 to 98): (1 to 15): (1 to 15). Understandably, the mass ratio specified above is merely an example, and may be set to any other appropriate values instead.

In some embodiments, the positive electrode plate 10 includes a positive current collector and a positive active material layer disposed on the positive current collector. The positive active material layer is disposed on one side or both sides of the positive current collector. In some embodiments, the positive current collector may be an aluminum foil, or may be another positive current collector commonly used in the art. In some embodiments, the thickness of the positive current collector may be 1 µm to 200 µm. In some embodiments, the positive active material layer may be applied on just a partial region of the positive current collector. In some embodiments, the thickness of the positive active material layer may be 10 µm to 500 µm. In some embodiments, the positive active material layer includes a positive active material. In some embodiments, the positive active material may include at least one of lithium cobalt oxide, lithium manganese oxide, lithium iron phosphate, lithium nickel cobalt manganese oxide, lithium nickel cobalt aluminum oxide, or lithium nickel manganese oxide. In some embodiments, the positive active material layer further includes a binder and a conductive agent. In some embodiments, the binder in the positive active material layer may include at least one of polyvinylidene difluoride, poly(vinylidene fluoride-co-hexafluoropropylene), poly(styrene-co-acrylate), poly(styrene-co-butadiene), polyamide, polyacrylonitrile, polyacrylic ester, polyacrylic acid, sodium polyacrylate, sodium carboxymethyl cellulose, polyvinyl acetate, polyvinylpyrrolidone, polyvinyl ether, polymethyl methacrylate, polytetrafluoroethylene, or polyhexafluoropropylene. In some embodiments, the conductive agent in the positive active material layer may include at least one of conductive carbon black, Ketjen black, graphite flakes, graphene, carbon nanotubes, or carbon fiber. In some embodiments, a mass ratio of the positive active material, the conductive agent, and the binder in the positive active material layer may be (70 to 98): (1 to 15): (1 to 15). Understandably, what is described above is merely an example, and the positive active material layer may adopt any other appropriate material, thickness, and mass ratio.

In some embodiments, the separator 11 includes at least one of polyethylene, polypropylene, polyvinylidene fluoride, polyethylene terephthalate, polyimide, or aramid fiber. For example, the polyethylene includes at least one of high-density polyethylene, low-density polyethylene, or ultra-high-molecular-weight polyethylene. Especially, the polyethylene and the polypropylene are highly effective in preventing short circuits, and can improve stability of the battery through a turn-off effect. In some embodiments, the thickness of the separator is within a range of approximately 5 µm to 500 µm.

In some embodiments, a surface of the separator may further include a porous layer. The porous layer is disposed on at least one surface of the substrate of the separator. The porous layer includes inorganic particles and a binder. The inorganic particles are at least one selected from aluminum oxide (Al₂O₃), silicon oxide (SiO₂), magnesium oxide (MgO), titanium oxide (TiO₂), hafnium dioxide (HfO₂), tin oxide (SnO₂), ceria (CeO₂), nickel oxide (NiO), zinc oxide (ZnO), calcium oxide (CaO), zirconium oxide (ZrO₂), yttrium oxide (Y₂O₃), silicon carbide (SiC), boehmite, aluminum hydroxide, magnesium hydroxide, calcium hydroxide, or barium sulfate. In some embodiments, a diameter of a pore of the separator is within a range of approximately 0.01 µm to 1 µm. The binder in the porous layer is at least one selected from polyvinylidene difluoride, poly(vinylidene difluoride-co-hexafluoropropylene), polyamide, polyacrylonitrile, polyacrylic ester, polyacrylic acid, sodium polyacrylate, sodium carboxymethyl cellulose, polyvinylpyrrolidone, polyvinyl ether, polymethyl methacrylate, polytetrafluoroethylene, and polyhexafluoropropylene. The porous layer on the surface of the separator can improve heat resistance, oxidation resistance, and electrolyte infiltration performance of the separator, and enhance adhesion between the separator and the electrode plate.

In some embodiments of this application, the electrode assembly of the electrochemical device is a jelly-roll electrode assembly or a stacked electrode assembly.

In some embodiments of this application, the electrochemical device includes, but is not limited to, a lithium-ion battery. In some embodiments, the electrochemical device may further include an electrolyte. The electrolyte may be one or more of a gel electrolyte, a solid-state electrolyte, or an electrolytic solution. The electrolytic solution includes a lithium salt and a nonaqueous solvent. The lithium salt is one or more selected from LiPF₆, LiBF₄, LiAsF₆, LiClO₄, LiB(C₆H₅)₄, LiCH₃SO₃, LiCF₃SO₃, LiN(SO₂CF₃)₂, LiC(SO₂CF₃)₃, LiSiF₆, LiBOB, and lithium difluoroborate. For example, the lithium salt is LiPF₆ because it provides a high ionic conductivity and improves cycle characteristics.

The nonaqueous solvent may be a carbonate compound, a carboxylate compound, an ether compound, another organic solvent, or any combination thereof.

The carbonate compound may be a chain carbonate compound, a cyclic carbonate compound, a fluorocarbonate compound, or any combination thereof.

Examples of the chain carbonate compound are diethyl carbonate (DEC), dimethyl carbonate (DMC), dipropyl carbonate (DPC), methyl propyl carbonate (MPC), ethylene propyl carbonate (EPC), ethyl methyl carbonate (EMC), or any combination thereof. Examples of the cyclic carbonate compound are ethylene carbonate (EC), propylene carbonate (PC), butylene carbonate (BC), vinyl ethylene carbonate (VEC), or any combination thereof. Examples of the fluorocarbonate compound are fluoroethylene carbonate (FEC), 1,2-difluoroethylene carbonate, 1,1-difluoroethylene carbonate, 1,1,2-trifluoroethylene carbonate, 1,1,2,2-tetrafluoroethylene carbonate, 1-fluoro-2-methyl ethylene, 1-fluoro-1-methyl ethylene carbonate, 1,2-difluoro-1-methyl ethylene carbonate, 1,1,2-trifluoro-2-methyl ethylene carbonate, trifluoromethyl ethylene carbonate, or any combination thereof.

Examples of the carboxylate compound are methyl acetate, ethyl acetate, n-propyl acetate, tert-butyl acetate, methyl propionate, ethyl propionate, propyl propionate, γ-butyrolactone, decanolactone, valerolactone, mevalonolactone, caprolactone, methyl formate, or any combination thereof.

Examples of the ether compound are dibutyl ether, tetraglyme, diglyme, 1,2-dimethoxyethane, 1,2-diethoxyethane, ethoxy-methoxyethane, 2-methyltetrahydrofuran, tetrahydrofuran, or any combination thereof.

Examples of the other organic solvent are dimethyl sulfoxide, 1,2-dioxolane, sulfolane, methyl sulfolane, 1,3-dimethyl-2-imidazolidinone, N-methyl-2-pyrrolidone, formamide, dimethylformamide, acetonitrile, trimethyl phosphate, triethyl phosphate, trioctyl phosphate, phosphate ester, or any combination thereof.

In some embodiments of this application, using a lithium-ion battery as an example, the lithium-ion battery is prepared by: winding or stacking the positive electrode plate, the separator, and the negative electrode plate sequentially into an electrode assembly, putting the electrode assembly into a package such as an aluminum plastic film ready for sealing, injecting an electrolytic solution, and performing chemical formation and sealing. Subsequently, a performance test is performed on the prepared lithium-ion battery.

A person skilled in the art understands that the method for preparing the electrochemical device (for example, the lithium-ion battery) described above is merely an example. To the extent not departing from the content disclosed herein, other methods commonly used in the art may be employed.

An embodiment of this application further provides an electronic device containing the electrochemical device. The electronic device according to this embodiment of this application is not particularly limited, and may be any electronic device known in the prior art. In some embodiments, the electronic device may include, but without being limited to, a notebook computer, pen-inputting computer, mobile computer, e-book player, portable phone, portable fax machine, portable photocopier, portable printer, stereo headset, video recorder, liquid crystal display television set, handheld cleaner, portable CD player, mini CD-ROM, transceiver, electronic notepad, calculator, memory card, portable voice recorder, radio, backup power supply, motor, automobile, motorcycle, power-assisted bicycle, bicycle, lighting appliance, toy, game console, watch, electric tool, flashlight, camera, large household battery, lithium-ion capacitor, and the like.

Some specific embodiments and comparative embodiments are enumerated below to give a clearer description of this application, using a lithium-ion battery as an example.

### Embodiment 1

Preparing a positive electrode plate: Dissolving lithium cobalt oxide as a positive active material, conductive carbon black as a conductive agent, and polyvinylidene difluoride (PVDF) as a binder at a mass ratio of 95: 2.5: 2.5 in an N-methyl-pyrrolidone (NMP) solution to form a positive slurry. Using an aluminum foil as a positive current collector, coating the positive current collector with the positive slurry in an amount of 18.37 mg/cm², and performing drying, cold pressing, and cutting to obtain a positive electrode plate.

Preparing a negative electrode plate: Dissolving a silicon-based material SiO, graphite, conductive carbon black as a conductive agent, and polyacrylic acid as a binder at a mass ratio of 25: 60: 5: 10 in deionized water to form a slurry of an active material layer. Using a 10 µm-thick copper foil as a negative current collector, coating the negative current collector with the negative slurry in an amount of 9.3 mg/cm², and drying the slurry to obtain a negative active material layer.

Putting neatly the negative electrode plate coated with the negative active material layer in a central control chamber in which the pressure is 1.5 Pa and the temperature is 150 °C. Introducing the deposited precursor Al into a reaction chamber by using nitrogen, and depositing the precursor Al for 3 minutes. Blowing and sweeping the undeposited reacted precursor Al away by using nitrogen, and then passing precursor H₂O in for 5 minutes. Repeating the foregoing precursor deposition process to obtain a protection layer.

Rolling a lithium sheet of 0.21 mg/cm² onto the surface of the electrode plate containing the protection layer, and cutting the rolled plate to obtain a negative electrode plate containing a lithium sheet on the surface.

Preparing a separator: Using an 8 µm-thick polyethylene (PE) film as a substrate of the separator, coating both sides of the substrate of the separator with a 2-µm thick aluminum oxide ceramic layer, and finally, applying polyvinylidene fluoride (PVDF) as a binder in an amount of 2.5 mg onto both sides that have been coated with the ceramic layer, and then drying the coating to obtain a separator.

Preparing an electrolytic solution: Adding LiPF₆ into a nonaqueous organic solvent in an environment in which a water content is less than 10 ppm, where the nonaqueous organic solvent is prepared by mixing propylene carbonate (PC), ethylene carbonate (EC), and diethyl carbonate (DEC) at a mass ratio of 1: 1: 1, and the concentration of the LiPF₆ is 1.15 mol/L. Subsequently, adding 12.5 wt% fluoroethylene carbonate (FEC), and stirring well to obtain an electrolytic solution.

Preparing a lithium-ion battery: Stacking the positive electrode plate, the separator, and the negative electrode plate sequentially in such a way that the separator is located between the positive electrode plate and the negative electrode plate to serve a function of separation, and winding the stacked structure to obtain an electrode assembly. Putting the electrode assembly in an aluminum-plastic film that serves as an outer package, dehydrating the electrode assembly at 80 °C, injecting the electrolytic solution, and sealing the package. Performing steps such as chemical formation, degassing, and edge trimming to obtain a lithium-ion battery.

The steps in other embodiments and comparative embodiments are the same as those in Embodiment 1 except changed parameter values. The specific changed parameter values are shown in the Table 1 below.

The following describes the test method of each parameter in this application.

### Testing the porosity of the negative electrode plate:

Picking an electrode assembly, and discharging the electrochemical system at 0.5 C at a temperature of 25 °C until a fully discharged state (the electrochemical system is discharged until a voltage of 3.0 V to reach the fully discharged state when the positive active material is lithium cobalt oxide, and the full-discharge voltage of other electrochemical systems is determined by a person skilled in the art depending on the electrochemical system). Disassembling the electrode assembly and taking out a negative electrode plate for testing.

Stamping the negative electrode plate into 40 specimen discs by use of a stamping press, each disc being 10 mm in diameter. Weighing out some specimens in a particular amount by mass, and putting the specimens in a true density tester. Sealing the test system, and passing nitrogen gas in according to the procedure. Measuring the gas pressure in the specimen chamber and the expansion chamber, and then calculating the true volume according to the Bohr's law.

### Testing the heat emission of the negative electrode plate supplemented with lithium:

Picking an electrode assembly, and discharging the electrochemical system at 0.5 C at a temperature of 25 °C until a fully discharged state (the electrochemical system is discharged until a voltage of 3.0 V to reach the fully discharged state when the positive active material is lithium cobalt oxide, and the full-discharge voltage of other electrochemical systems is determined by a person skilled in the art depending on the electrochemical system). Disassembling the electrode assembly and taking out a negative electrode plate for testing.

Cutting a baked negative electrode plate to retain only the double-side-coated region. Supplementing lithium for both sides by a designed amount of lithium supplementation. Manually winding the negative electrode plate onto a polyvinyl chloride (PVC) tube (outside diameter: 20 mm; tube thickness: 1.5 mm; tube length: 30 cm) immediately after the negative electrode plate is supplemented with lithium. Winding the electrode plate for a length of 3EA each time, and laying a temperature measuring wire of a multi-channel thermometer at a middle position of the 2^{nd} EA of the electrode plate. Recording the time-varying temperature change of the negative electrode plate by use of a thermometer, and recording the temperature measuring channel corresponding to each test and the start time of each test. Performing 3 parallel tests on each group of negative electrode plates, and calculating an initial value of a temperature peak of the negative electrode plates and the time required to reach the peak.

### Testing the metal element of the negative electrode plate:

Picking an electrode assembly, and discharging the electrochemical system at 0.5 C at a temperature of 25 °C until a fully discharged state (the electrochemical system is discharged until a voltage of 3.0 V to reach the fully discharged state when the positive active material is lithium cobalt oxide, and the full-discharge voltage of other electrochemical systems is determined by a person skilled in the art depending on the electrochemical system). Disassembling the electrode assembly and taking out a negative electrode plate for testing.

Weighing out a part (3 to 5 grams, as a specimen) of a manufactured negative electrode plate that is 1540.25 mm² in size, and sonicating the specimen for 5 minutes with pure water under ultrasonication conditions of 53 KHz and 120 W. Taking out the current collector by use of a non-metallic pincer. Suction-filtering the negative electrode by use of a 0.45 µm-thick aqueous filter film. Vacuum-drying at 105 °C to obtain a powder, and digesting the powder by means of microwave digestion. Filtering the digested product to obtain a clear solution, and testing the desired metal or non-metal elements by means of ICP-OES after bringing the solution to a predetermined volume.

### Testing the protection layer in the negative electrode plate:

Picking an electrode assembly, and discharging the electrochemical system at 0.5 C at a temperature of 25 °C until a fully discharged state (the electrochemical system is discharged until a voltage of 3.0 V to reach the fully discharged state when the positive active material is lithium cobalt oxide, and the full-discharge voltage of other electrochemical systems is determined by a person skilled in the art depending on the electrochemical system). Disassembling the electrode assembly and taking out a negative electrode plate for testing.

Cutting the negative electrode plate with an ion beam milling technology such as a focused ion beam (FIB) to obtain a cross-section of a specimen, and scanning the cross-section in a scanning electron microscope (SEM) to obtain a cross-sectional view. Observing, in a transmission electron microscope (TEM), the thickness of the protection layer that extends from the outer surface to the surface of the inner active particle (25 µm).

### Testing the K value:

Picking an electrode assembly, and discharging the electrochemical system at 0.5 C at a temperature of 25 °C until a fully discharged state (the electrochemical system is discharged until a voltage of 3.0 V to reach the fully discharged state when the positive active material is lithium cobalt oxide, and the full-discharge voltage of other electrochemical systems is determined by a person skilled in the art depending on the electrochemical system). Disassembling the electrode assembly and taking out a negative electrode plate for testing.

Making a button battery out of the negative electrode plate and a counter electrode to test the capacity. Leaving the button battery to stand at a room temperature for 48 hours after the capacity is measured, and then measuring the voltage of the button battery, denoted as V₁. Leaving the button battery to stand for another 48 hours and then measuring the voltage, denoted as V₂. Calculating K as: K = (V₁ - V₂)/48, measured in mV/h.

Table 1 shows parameters and evaluation results in Embodiments 1 to 3 and Comparative Embodiments 1 to 2.

**Table 1**

| | Mass percent of silicon-based material in active material layer | Type of first material in protection layer | Porosity of negative electrode plate | Mass ratio between first material and active material layer | Temperature increment caused by lithium supplementation | Temperature increment peak | K value |
|---|---|---|---|---|---|---|---|
| Embodiment 1 | 25 | Al₂O₃ | 25 | 0.21% | 3 | 39 | 0.034 |
| Embodiment 2 | 40 | Al₂O₃ | 24 | 0.24% | 3 | 38 | 0.040 |
| Embodiment 3 | 60 | Al₂O₃ | 24 | 0.25% | 2 | 37 | 0.046 |
| Comparative Embodiment 1 | 25 | / | 19 | / | 5 | 85 | 0.081 |
| Comparative Embodiment 2 | 60 | / | 23 | / | 8 | >100 | 0.113 |

As can be seen from Embodiments 1 to 3 and Comparative Embodiments 1 to 2, the protection layer applied in the negative electrode plate reduces the temperature increment caused by lithium supplementation, lowers the temperature increment peak, and reduces the K value. This indicates that the protection layer applied in the negative electrode plate improves the storage stability and safety performance of the electrochemical device.

In addition, with the increase of the mass percent of the silicon-based material in the active material layer of the negative electrode plate, the temperature increment caused by lithium supplementation, the temperature increment peak, and the K value are basically unchanged. That is because the protection layer plays a protective role on the active material layer and reduces the exothermic side reactions between the lithium metal or electrolytic solution and the silicon-based material.

Table 2 shows parameters and evaluation results of Embodiments 1, 2, and 4.

**Table 2**

| | Mass percent of silicon-based material in active material layer | Type of first material in protection layer | Porosity of negative electrode plate | Mass ratio between first material and active material layer | Temperature increment caused by lithium supplementation | Temperature increment peak | K value |
|---|---|---|---|---|---|---|---|
| Embodiment 1 | 25 | Al₂O₃ | 25 | 0.21% | 3 | 39 | 0.034 |
| Embodiment 4 | 25 | Al₂O₃ | 20 | 0.22% | 2 | 38 | 0.028 |
| Embodiment 2 | 25 | Al₂O₃ | 15 | 0.23% | 3 | 37 | 0.028 |

As can be seen from comparison between Embodiments 1, 2, and 4, when the porosity of the negative electrode plate falls within the range of 15% to 25%, both the temperature increment caused by lithium supplementation and the temperature increment peak are relatively low, and the K value is relatively small, indicating that the storage performance of the electrochemical device in this case is relatively stable.

Table 3 shows parameters and evaluation results of Embodiments 1 and 5 to 8.

**Table 3**

| | Mass percent of silicon-based material in active material layer | Type of first material in protection layer | Porosity of negative electrode plate | Mass ratio between first material and active material layer | Temperature increment caused by lithium supplementation | Temperature increment peak | K value |
|---|---|---|---|---|---|---|---|
| Embodiment 1 | 25 | Al₂O₃ | 25 | 0.21% | 3 | 39 | 0.034 |
| Embodiment 5 | 25 | TiO₂ | 21 | 0.24% | 2 | 36 | 0.041 |
| Embodiment 6 | 25 | MgF₂ | 23 | 0.19% | 4 | 33 | 0.052 |
| Embodiment 7 | 25 | ZnF₂ | 22 | 0.24% | 6 | 38 | 0.032 |
| Embodiment 8 | 25 | RuO₂ | 24 | 0.21% | 5 | 35 | 0.044 |

As can be seen from comparison between Embodiments 1 and 5 to 8, various types of first materials in use protect the active material layer properly. The temperature increment caused by lithium supplementation, the temperature increment peak, and the K value are relatively low, indicating that the first materials suppress the side reactions of the active material and improve the safety performance and storage performance of the electrochemical device.

Table 4 shows parameters and evaluation results of Embodiments 1, 4 and 9 to 11.

**Table 4 Content of inert substance**

| | Mass percent of silicon-based material in active material layer | Type of first material in protection layer | Porosity of negative electrode plate | Mass ratio between first material and active material layer | Temperature increment caused by lithium supplementation | Temperature increment peak | K value |
|---|---|---|---|---|---|---|---|
| Embodiment 1 | 25 | Al₂O₃ | 25 | 0.21% | 3 | 39 | 0.034 |
| Embodiment 4 | 25 | Al₂O₃ | 23 | 0.56% | 2 | 38 | 0.035 |
| Embodiment 9 | 25 | Al₂O₃ | 23 | 0.75% | 2 | 37 | 0.028 |
| Embodiment 10 | 25 | Al₂O₃ | 23 | 2% | 2 | 37 | 0.028 |
| Embodiment 11 | 25 | Al₂O₃ | 23 | 4% | 2 | 37 | 0.028 |

As can be seen from comparison between Embodiments 1, 4, and 9 to 11, when the mass ratio between the first material and the active material layer increases, the temperature increment caused by lithium supplementation, the temperature increment peak, and the K value assume a tendency to decrease to some extent at the beginning, and then remain basically unchanged. Therefore, just a small amount of the first material can exert a relatively good protection effect, and exert a favorable impact on the energy density of the electrochemical device. When the mass percent of the first material further increases, the first material exerts no further improvement effect, but poses an adverse effect on the increase of the energy density of the electrochemical device.

What is described above is merely exemplary embodiments of this application and the technical principles thereof. A person skilled in the art understands that the scope of disclosure in this application is not limited to the technical solutions formed by a specific combination of the foregoing technical features, but covers other technical solutions formed by arbitrarily combining the foregoing technical features or equivalents thereof, for example, a technical solution formed by replacing any of the foregoing features with a technical feature disclosed herein and serving similar functions.

## Claims

1. A negative electrode plate, comprising:
a current collector;
an active material layer, located on the current collector, wherein the active material layer comprises a silicon-based material and a carbon material; and
a protection layer, wherein the protection layer comprises an element M, the active material layer is disposed between the current collector and the protection layer, and, when the protection layer is divided into two or more layers at one or more arbitrary positions, a mass percent of the element M in a layer away from the current collector is greater than a mass percent of the element M in a layer close to the current collector, and the element M comprises at least one of Al, Ti, Mg, Ru, Zr, Hf, Nb, Ca, Zn, or Ce.

2. The negative electrode plate according to claim 1, wherein the mass percent of the element M in the protection layer increases gradually with increase of remoteness from the current collector.

3. The negative electrode plate according to claim 1, wherein the protection layer comprises a first material, and the first material comprises at least one of Al₂O₃, TiO₂, MgO, RuO₂, AlF₃, CaF₂, MgF₂, ZnF₂, or CeO₂.

4. The negative electrode plate according to claim 1, wherein a thickness of the protection layer is 0.1 nm to 10 nm.

5. The negative electrode plate according to claim 3, wherein a mass ratio between the first material and the active material layer per unit area is less than 5%.

6. The negative electrode plate according to claim 3, wherein a mass ratio between the first material and the active material layer per unit area is less than 2%.

7. The negative electrode plate according to claim 1, wherein a porosity of the negative electrode plate is 15% to 25%.

8. The negative electrode plate according to claim 1, wherein the negative electrode plate satisfies at least one of the following conditions:
a mass percent of the silicon-based material in the active material layer is 5% to 60%;
the silicon-based material comprises at least one of a silicon-oxygen material, a silicon-carbon material, or a silicon alloy; and
the carbon material comprises graphite.

9. The negative electrode plate according to claim 1, further comprising a lithium metal layer, wherein the lithium metal layer is disposed on the protection layer on a side away from the active material layer.

10. An electrochemical device, comprising:
a positive electrode plate;
a negative electrode plate;
a separator, disposed between the positive electrode plate and the negative electrode plate, wherein
the negative electrode plate is the negative electrode plate according to any one of claims 1 to 9.

11. An electronic device, comprising the electrochemical device according to claim 10.
